# EUROPÄISCHE PATENTSCHRIFT

(11) **EP 3 265 532 B1**
(45) Veröffentlichungstag und Bekanntmachung des Hinweises auf die Patenterteilung: **23.01.2019**
(21) Anmeldenummer: 16706629.9
(22) Anmeldetag: 26.02.2016
(51) Int. Cl.: C09J 167/02

(54) **KLEBSTOFFE MIT GERINGEN VOC UND FOGGING-WERTEN**
ADHESIVES WITH LOW VOC AND FOGGING VALUES
COLLES PAUVRES EN VOC ET AYANT DES VALEURS D'EMBUAGE RÉDUITES

(30) Priorität: 02.03.2015 EP 15157141
(43) Veröffentlichungstag der Anmeldung: 10.01.2018
(73) Patentinhaber: Evonik Degussa GmbH, 45128 Essen (DE)
(72) Erfinder: CRON, Christina, 42555 Velbert (DE); BRENNER, Gabriele, 48249 Dülmen (DE); SCHLEIMER, Bernhard, 45770 Marl (DE)
(86) Internationale Anmeldenummer: PCT/EP2016/054096
(87) Internationale Veröffentlichungsnummer: WO 2016/139146

(56) Entgegenhaltungen:
- EP-A1- 1 149 850
- EP-A2- 0 448 825

## Beschreibung

Die Erfindung betrifft Klebstoffe auf der Basis von Polyesterpolyolen, die geringe VOC- und Fogging-Werte besitzen.

Schmelzklebstoffe stellen eine wichtige Klebstoffklasse für viele Anwendungen dar, beispielsweise im Automobilbereich, im Verpackungsbereich, der Möbelfertigung oder der Textilverklebung. Sie sind bei Raumtemperatur fest und werden durch Erwärmen aufgeschmolzen und bei erhöhter Temperatur in Substanz auf das Substrat aufgebracht. Beim Abkühlen verfestigen sie sich wieder und sorgen so bereits nach kurzer Zeit für eine feste Klebbindung.
Eine Untergruppe der Schmelzklebstoffe sind reaktive Schmelzklebstoffe, die nach dem Auftragen zusätzlich vernetzen und dadurch irreversibel zum Duroplasten aushärten. Im Vergleich zu den nicht vernetzenden, rein physikalisch aushärtenden thermoplastischen Schmelzklebstoffen führt die zusätzliche chemische Aushärtung zu einer höheren Stabilität der Klebverbindung. Reaktive Schmelzklebstoffe sind besonders geeignet für Verklebungen im Automobil- und Transportbereich, Verpackungsbereich, in der Bauindustrie, Textilindustrie und in der holzverarbeitenden Industrie.

Ein bevorzugtes Beispiel für reaktive Schmelzklebstoffe sind einkomponentige feuchtigkeitshärtende Schmelzklebstoffe. Hierbei handelt es sich in der Regel um isocyanatfunktionalisierte Polymere, die durch Umsetzung von Polyolen bzw. Polyolmischungen mit einem Überschuss an Polyisocyanaten zugänglich sind.
Bei den Polyolen kann sich um jedes beliebige Hydroxygruppen tragende Polymer handeln. Hierzu zählen beispielsweise Polycarbonatdiole, Hydroxylgruppen terminierte Polybutadiene, Polyether oder Polyhydroxyacrylate bzw. Polyhydroxymethacrylate. Besonders bevorzugt sind Polyesterpolyole. Diese lassen sich beispielsweise über die ring-öffnende Polymerisation von Lactonen und bevorzugt über die lösungsmittelfreie Schmelzekondensation von Polyolen mit Polycarbonsäuren oder deren Derivaten herstellen. Bevorzugt sind lineare bifunktionelle Polyesterpolyole aus Diolen und Dicarbonsäuren, Diestern und/oder Dianhydriden. Reaktive Schmelzklebstoffe auf der Basis von Polyesterpolyolen zeigen eine gute Haftung auf einer Vielzahl von Substraten, da die Estergruppen über Wasserstoffbrückenbindungen an die Substratoberfläche binden können. Zudem lassen sich über die Art und das Verhältnis der Comonomere die Polymereigenschaften und somit auch die Klebstoffeigenschaften über einen breiten Bereich einstellen.

Bei der Herstellung der vorab genannten Systeme ist darauf zu achten, dass die erhaltenen Polymere möglichst geringe VOC-Werte aufweisen. VOC bzw. VOCs nach volatile organic compound[s] ist die Sammelbezeichnung für organische, also kohlenstoffhaltige Stoffe, die leicht verdampfen und daher flüchtig sind).

Nachteilig ist, dass bei der Schmelzekondensation von Diolen mit Dicarbonsäuren, Diestern und/oder Dianhydriden mehrere Nebenreaktionen auftreten können. Hierzu zählt unter anderem die Bildung von cyclischen Dimeren durch Ringschluss eines Diolmoleküls mit einem Dicarbonsäurederivat. Die cyclischen Dimere bilden sich über eine Gleichgewichtsreaktion aus linearen Dimeren, die wiederum durch Umesterungsreaktionen an den Kettenenden der linearen Polyesterketten entstehen (vgl. EP 1571171). Das bedeutet, dass immer ein Anteil an cyclischen Dimeren neben dem linearen Polyester vorliegt. Abhängig von der Größe und Stabilität des Rings liegt der typische Anteil bei bis zu 1 Gew.-% (vgl. US 5712320).

Die Flüchtigkeit der Cyclen ist abhängig von der Ringgröße und somit abhängig von der Art der eingesetzten Monomerbausteine. Beispielsweise bilden Adipinsäure und Diethylenglykol ein cyclisches Diethylenglykoladipat aus insgesamt 13 Ring-Atomen, das leicht sublimiert (vgl. US 5712320). Da die cyclischen Dimere keine Hydroxylfunktionalität besitzen, reagieren sie nicht mit Isocyanatgruppen und werden nicht in das Polyurethannetzwerk eingebaut. Die Cyclen können daher aus dem ausgehärteten Klebstoff abdampfen oder migrieren. Dies ist besonders bei Verklebungen im Innenraum von Fahrzeugen und im Verpackungsbereich für Lebensmittel problematisch. Bei Lebensmittelverpackungen können die flüchtigen Bestandteile in die Lebensmittel migrieren und den Geschmack verändern oder die Lebensmittel gesundheitsbedenklich schädigen. Im Automobilbereich reichern sich die flüchtigen Bestandteile innerhalb der Fahrgastzelle in der Atemluft an und können für einen unangenehmen Geruch sorgen. Diese können gesundheitlich bedenklich sein. Besonders kritisch ist es, wenn die ausgasenden Substanzen sich auf kalten Oberflächen, wie der Windschutzscheibe, abscheiden und dort zu Beeinträchtigungen der Sicht führen. Dieser Effekt wird allgemein als "Fogging" bezeichnet.

EP 1 149 850 A1 beschreibt thermoplastische Schmelzklebstoffe, die eine Polyesterkomponente enthalten, für die aus langkettiger Dicarbonsäure (Dodecandicarbon- sowie Sebazinsäure) und langkettigem Diol (Dodecan- und Decandiol) aufgebaut ist. Die Schmelzklebstoffe können in der Schuh-, holzverarbeitenden oder Metallindustrie eingesetzt werden.

EP 0 448 825 A2 offenbart einen Heißschmelzklebstoff, der eine Polyesterkomponente enthält, die aus Dodecansäure und Dodecandiol aufgebaut ist. Die Heißschmelzklebstoffe der EP 0 448 825 A2 können insbesondere bei der Sohlenverklebung, der Möbelfertigung und der Herstellung von Innenteilen in Kraftfahrzeugen eingesetzt werden.

Aus den vorab genannten Gründen besteht für Anwendungen im Automobilinnenbereich die Forderung nach Bauteilen sowie Kleb-, Dicht- und Beschichtungsstoffen mit niedrigen VOC- und Fogging-Werten, die in der Regel nach der Industrienorm VDA 278 gemessen werden. Die Norm definiert die Prüfbedingungen zur Ermittlung der Emissionswerte bei bestimmten Temperaturen. Nach den geforderten Grenzwerten für ausgehärtete Kleb- und Dichtstoffe definierter Schichtdicke darf der VOC-Wert, das ist der Anteil an flüchtigen organischen Substanzen, die bei 90°C innerhalb von 30 Minuten als Gase emittiert werden, 100 µg/g nicht überschreiten. Zusätzlich darf der sogenannte FOG-Wert, der ein Maß für die Menge an organischen Emissionen bei 120°C innerhalb von 30 Minuten ist, nicht höher als 250 µ/g liegen.
Die Literatur, z. B. die Patentanmeldungen DE 19528539 und DE 19601410, JP 2004107457 und EP 1481998, beschreibt vielfältige Versuche, flüchtige Cyclen destillativ bei erhöhten Temperaturen und unter vermindertem Druck zu entfernen. Wird beispielsweise eine Polyesterschmelze im Anschluss an die Kondensation rasch auf Temperaturen unterhalb des Erweichungspunkts abgekühlt, gelingt es, den Anteil an cyclischen Komponenten zu verringern. Sobald der Polyester jedoch erneut aufgeschmolzen wird, steigt die Konzentration an dimeren Cyclen wieder an, da sich die cyclischen Komponenten durch die Gleichgewichtsreaktion nachbilden.

Ausgehärtete Polyurethanschmelzklebstoffe auf der Basis von amorphen festen oder flüssigen Polyesterpolyolmischungen erfüllen in bestimmten Kombinationen die Grenzwerte der Automobilindustrie gemäß VDA 278. Hingegen haben ausgehärtete Formulierungen, die zusätzlich zu amorphen Polyesterpolyolen am Markt übliche feste, kristalline oder teilkristalline Polyesterpolyole enthalten, zu hohe VOC- und FOG- Werte und erfüllen die Grenzwerte gemäß der VDA 278 nicht. Der Grund ist, dass die üblicherweise für die Synthese kristalliner Polyester eingesetzten Monomerbausteine dimere Cyclen bilden, die im für die VDA 278 relevanten Bereich flüchtig sind. Hierzu zählen vor allem die Dimere aus aliphatischen Diolen und Dicarbonsäuren, wie beispielsweise cyclisches Neopentylglykoladipat, Butandioladipat, Hexandioladipat, Hexandiolsebacat etc.

Die US 5712230 beispielsweise beansprucht emissionsarme Polyesterpolyurethanschäume, in denen Polyester eingesetzt werden, deren Monomere keine Cyclen mit Ringgrößen zwischen 12 und 14 Atomen bilden können.

Die WO 2012125353 beansprucht Polyesterpolyole basierend auf Phthalsäureanhydrid und ausgewählten Diolbausteinen, beispielsweise Ethylenglykol, Propylenglykol, Neopentylglykol oder Hexandiol. Die Polyesterpolyole besitzen zwar eine geringe Konzentration an cyclischen Dimeren, allerdings sind die Polymere nicht kristallin.

Aufgabe der vorliegenden Erfindung war daher die Bereitstellung von Kleb- bzw. Dichtstoffformulierungen auf der Basis von Schmelzklebstoffen, bevorzugt von reaktiven Schmelzklebstoffen, die die gleichen Anforderungen wie die Formulierungen des Stands der Technik erfüllen und niedrige VOC- und FOG-Werte aufweisen und bevorzugt den Grenzwerten der Automobilindustrie gemäß der Norm VDA 278 entsprechen. Darüber hinaus soll die Schmelzklebstoffformulierung auch dauerhaft, das heißt auch nach Lagerung der eingesetzten Systeme, z. B. in der Schmelze, eine geringe Cyclenkonzentration aufweisen. Nach der Aushärtung, beispielsweise mit Diisocyanaten, können sich in der Regel keine dimeren Cyclen mehr bilden.

Das vorab genannte komplexe Anforderungsprofil wird durch die Verwendung spezifischer Polyester gemäß der vorliegenden Erfindung in Schmelzklebstoffen gelöst.

Ein erster Gegenstand der vorliegenden Erfindung ist demgemäß die Verwendung von Polyestern auf Basis von Polycarbonsäuren und Di- oder Polyolen, enthaltend Dicarbonsäuren der Formel HOOC-(CH2)x-COOH mit x > 10 und Diole der Formel HO-(CH2)y-OH, mit der Maßgabe, dass mindestens 50 Molprozent der Dicarbonsäuren, bezogen auf die gesamte Menge an Polycarbonsäurekomponenten, und mindestens 50 Molprozent der Diole, bezogen auf die gesamte Menge an Di- oder Polyolen, die Bedingung x+y ≥18 erfüllen, in Schmelzklebstoffen.
Es hat sich überraschend gezeigt, dass durch die erfindungsgemäßen Monomerkombinationen feste, kristalline oder teilkristalline Polyesterpolyole mit einem Schmelzpunkt oberhalb der Raumtemperatur erhalten werden, die nach Aushärtung im reaktiven Schmelzklebstoff geringe VOC- und FOG- Werte aufweisen.

Geeignete Monomerkombinationen sind langkettige lineare α,ω-Dicarbonsäuren in Kombination mit linearen aliphatischen α,ω-Diolen, wie beispielsweise Hexandiol-1,6. Zyklische Dimere aus diesen Monomeren besitzen aufgrund ihrer Ringgröße eine ausreichend hohe Flüchtigkeit.

Die Emissionswerte gemessen gemäß VDA 278 liegen selbst bei Formulierungen, die als Polyole ausschließlich die erfindungsgemäßen kristallinen oder teilkristallinen Polyester enthalten bei geringeren Messwerten als konventionelle Polyesterpolyole, wie beispielsweise Hexandioladipat. Erfindungsgemäß liegen die VOC- und FOG- Werte innerhalb der Grenzwerte der VDA 278.

Die erfindungsgemäß eingesetzten Polyester zeichnen sich durch den zwingend notwendigen Anteil an langkettigen linearen α,ω-Dicarbonsäuren der Formel HOOC-(CH2)x-COOH mit x > 10 und linearen Diolen der Formel HO-(CH2)y-OH mit x + y ≥ 18 aus.

In den Dicarbonsäuren der Formel HOOC-(CH2)x-COOH und Diolen der Formel HO-(CH2)y-OH sind x und y jeweils ganze Zahlen, insbesondere x > 10 und y ≥ 2. In einer bevorzugten Ausführungsform ist x ≥ 12 und ganz besonders bevorzugt ist x ≥ 14. In einer bevorzugten Ausführungsform ist y ≥ 6, besonders bevorzugt ist y = 6.

Geeignete Dicarbonsäuren der Formel HOOC-(CH2)x-COOH sind insbesondere Brassylsäure,Tetradecandicarbonsäure, Hexadecandicarbonsäure und Octadecandicarbonsäure, wobei Tetradecandicarbonsäure und Octadecandicarbonsäure besonders bevorzugt eingesetzt werden.
Der Anteil dieser Dicarbonsäuren, bezogen auf den Gesamtanteil an Polycarbonsäuren, beträgt mindestens 50 Molprozent, bevorzugt mindestens 70 Molprozent, bezogen auf die Gesamtheit an eingesetzten Dicarbonsäuren.

Darüber hinaus kann der erfindungsgemäß eingesetzte Polyester weitere Di- oder Polycarbonsäuren enthalten. Die restlichen Di- bzw. Polycarbonsäuren bzw. deren Derivate sind beliebig. Beispiele für geeignete Di- und/oder Polycarbonsäuren und deren Derivate sind zum einen aromatische Verbindungen wie Dimethylterephthalat, Terephthalsäure, Isophthalsäure, Naphthalindicarbonsäure und Phthalsäureanhydrid. Weitere Beispiele sind cyclische und lineare aliphatische Dicarbonsäuren wie Cyclohexandicarbonsäure, Hexahydrophthalsäure, Bernsteinäure, Glutarsäure, Adipinsäure, Sebazinsäure, Azelainsäure sowie deren Diester und Anhydride. Auch Polycarbonsäuren mit mehr als zwei funktionellen Gruppen, wie beispielsweise Trimellitsäureanhydrid können eingesetzt werden.

Im Rahmen der vorliegenden Erfindung werden unter Di oder Polycarbonsäuren auch deren Derivate, beispielsweise Ester oder Anhydride, verstanden.

Geeignete Diole der Formel HOOC-(CH2)y-COOH sind insbesondere Hexandiol, Nonandiol, Decandiol und Dodecandiol, wobei Hexandiol und Nonandiol besonders bevorzugt eingesetzt werden.

Der Anteil dieser Diole, bezogen auf den Gesamtanteil an Polyolen, beträgt mindestens 50 Molprozent, bevorzugt mindestens 70 Molprozent.

Darüber hinaus kann der erfindungsgemäß eingesetzte Polyester weitere Di- oder Polyole enthalten. Beispiele für geeignete Di- und/oder Polyole und deren Derivate sind aliphatische Diole, wie beispielsweise Monoethylenglykol, Diethylenglykol, 1,3-Propandiol, 1,2-Propandiol, 1,4-Butandiol, 1,5-Pentandiol, Methylpropandiol, Dicidol, Cyclohexandimethanol, Butylethylpentandiol, Neopentylglykol.
Auch Polyole mit mehr als zwei funktionellen Gruppen, wie beispielsweise Trimethylolpropan, Pentaerythrol oder Glycerin können eingesetzt werden. Außerdem können Lactone und Hydroxycarbonsäuren als Di- oder Polyole verwendet werden.

Die beschriebenen Polyester erlauben die Bereitstellung von Schmelzklebstoffen mit geringen VOC- und FOG- Werten, da die sich gegebenenfalls aus den genannten Komponenten bildenden cyclischen Dimere eine geringe Neigung zur Flüchtigkeit zeigen.

Die Synthese der Polyester erfolgt bevorzugt über eine Schmelzekondensation. Hierzu werden die vorab genannten Di- und/oder Polycarbonsäuren und Di- und/oder Polyole im Äquivalentverhältnis von Hydroxyl- zu Carboxylgruppen von 0.5 bis 1.5, bevorzugt 1.0 bis 1.3, vorgelegt und aufgeschmolzen. Die Polykondensation erfolgt in der Schmelze bei Temperaturen zwischen 150 und 280 °C innerhalb von 3 bis 30 Stunden. Dabei wird zunächst ein Großteil der freiwerdenden Wassermenge bei Normaldruck abdestilliert. Im weiteren Verlauf wird das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Typische Katalysatoren sind Organotitan- oder -zinnverbindungen wie Tetrabutyltitanat oder Dibutylzinnoxid.

Denkbar sind auch Katalysatoren, die auf anderen Metallen wie z. B. Zink oder Antimon basieren, sowie metallfreie Veresterungskatalysatoren. Weiterhin sind weitere Additive und Fahrhilfsmittel wie Antioxidantien oder Farbstabilisatoren möglich.

Die erfindungsgemäß eingesetzten Polyester besitzen mindestens eine Hydroxyl- und/oder Carboxylendgruppe, bevorzugt liegt die Funktionalität zwischen 2,0 und 3,0.

Die Konzentration an Hydroxylendgruppen, titrimetrisch nach DIN 53240-2 bestimmt, liegt zwischen 0 und 200 mg KOH /g, bevorzugt zwischen 5 und 50 mg KOH /g.

Die Konzentration an Säureendgruppen, bestimmt nach DIN EN ISO 2114, liegt zwischen 0 und 50 mg KOH/g, bevorzugt jedoch unter 2 mg KOH/g.

Das zahlenmittlere Molekulargewicht der erfindungsgemäß eingesetzten Polyester beträgt 500 - 30 000 g/mol, vorzugsweise 1000 - 20 000 g/mol. Es wird nach DIN 55672-1 mittels Gelpermeationschromatographie in Tetrahydrofuran als Eluent und Polystyrol zur Kalibrierung bestimmt.

Die erfindungsgemäßen Polyester besitzen einen oder mehrere Schmelzpunkte. Bevorzugt liegt mindestens ein Schmelzpunkt oberhalb der Raumtemperatur von 23°C. Die Summe der einzelnen Schmelzenthalpien in der ersten Aufheizkurve beträgt 1 - 300 J/g, bevorzugt 5 - 130J/g. Zusätzlich kann der erfindungsgemäße Polyester eine Glasübergangstemperatur im Bereich von - 80°C bis 100°C, bevorzugt zwischen -60°C und 0°C besitzen.
Die Bestimmung der thermischen Eigenschaften erfolgt nach der DSC-Methode nach DIN 53765. Für die Ermittlung der Schmelzpunkte wird die erste Aufheizkurve herangezogen, für die Ermittlung der Glasübergangstemperatur die 2. Aufheizkurve.

In den erfindungsgemäßen Schmelzklebstoffen werden bevorzugt Mischungen unterschiedlicher Polyesterpolyole eingesetzt, da sich durch eine gezielte Mischung ein auf die Anwendung abgestimmtes, ausgewogenes Eigenschaftsprofil einstellen lässt. Insbesondere werden amorphe, nichtkristalline, bei Raumtemperatur feste oder flüssige Polyesterpolyole mit festen, kristallinen Polyesterpolyolen kombiniert. Durch die Verwendung von kristallinen Komponenten lässt sich unter anderem ein schnelles physikalisches Abbinden und somit eine hohe Anfangsfestigkeit erreichen. Hohe Anfangsfestigkeiten erlauben eine zügige Weiterverarbeitung des verklebten Bauteils und somit kurze Taktzeiten. Daher ist ein gewisser Anteil an kristallinen Polyesterpolyolen in der Schmelzklebstoffformulierung erforderlich.

In einer bevorzugten Ausführungsform der vorliegenden Erfindung handelt es sich bei den Schmelzklebstoffen um thermoplastische Schmelzklebstoffe, die rein physikalisch aushärten. In einer weiteren, besonders bevorzugten Ausführungsform der vorliegenden Erfindung handelt es sich bei den Schmelzklebstoffen um reaktive Schmelzklebstoffe (Reactive Hot-melts, RHM), die zusätzlich chemisch vernetzen, wobei feuchtigkeitshärtende Schmelzklebstoffe insbesondere bevorzugt sind.

Bei der Anwendung in reaktiven Schmelzklebstoffen beträgt das zahlenmittlere Molekulargewicht der erfindungsgemäß eingesetzten Polyester bevorzugt 500 - 10 000 g/mol, vorzugsweise 2000-8000 g/mol.
Der Anteil des erfindungsgemäßen Polyesters an der Formulierung beträgt, bezogen auf die gesamte Formulierung, 1 - 99 Gewichtsprozent, bevorzugt 5-85 Gewichtsprozent und besonders bevorzugt 10 - 70 Gewichtsprozent.
Dadurch wird eine ausreichende Abbindegeschwindigkeit und daraus resultierend eine ausreichende Handhabungsfestigkeit des reaktiven Hotmelts unmittelbar nach dem Klebstoffauftrag gewährleistet.

In bevorzugten Ausführungsformen sind in den Schmelzklebstoffen neben den erfindungsgemäß eingesetzten Polyestern auch andere Polyole vorhanden, unter denen beispielsweise Polyesterpolyole, Polyetherpolyole und beliebige hydroxylfunktionelle Komponenten zu verstehen sind. Die Wahl dieser Polyole ist an sich beliebig. Allerdings sollen die eingesetzten Polyole die VOC- und FOG- Werte der Formulierung nicht wesentlich erhöhen. Bevorzugt sollen die VOC und FOG- Werte der einzelnen Polyole, bezogen auf ihren Anteil in der gesamten Formulierung, die erforderlichen Grenzwerte gemäß der VDA 278 nicht überschreiten.

Die beigemischten Polyesterpolyole können flüssige oder feste, amorphe oder (teil-)kristalline Polyester mit Molekulargewichten mit einem Zahlenmittel zwischen 500 g/mol und 30000 g/mol, bevorzugt zwischen 2000 g/mol und 10000 g/mol (berechnet aus der Hydroxylzahl) sein, wobei lineare Polyesterpolyole bevorzugt verwendet werden. Die beigemischten Polyetherpolyole sind Polyetherdi- und -triole. Beispiele hierfür sind Homo- und Copolymere aus Ethylenglykol, Propylenglykol und Butandiol-1,4. Das Molekulargewicht (Zahlenmittel) der beigemischten Polyetherpolyole sollte in einem Bereich von 200 g/mol bis 10000 g/mol, bevorzugt zwischen 400 g/mol und 6000 g/mol sein. Beispiele für beliebige hydroxyfunktionelle Komponenten sind funktionalisierte (H-acide) thermoplastische Polyurethane (TPU) oder Polyacrylate und/oder Ethylen-Vinylacetatcopolymere (EVA).

Die feuchtigkeitsvernetzenden Schmelzklebstoffe werden durch die Umsetzung der Polyolmischung mit Polyisocyanaten erhalten. In den Klebstoffen beträgt in der Regel das OH:NCO-Verhältnis von Polyester zu Isocyanat 1:1,2 bis 1:3, vorzugsweise von 1:1,5 bis 1:2,5.

Die Polyisocyanate können di- und/oder multifunktionelle, aromatische, aliphatische und/oder cycloaliphatische Isocyanate sowie carbodiimidmodifizierte Isocaynate oder isocyanatterminierte Präpolymere sein. Aromatische Polyisocyanate sind besonders bevorzugt. Beispiele für Polyisocyanate sind 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat und Mischungen daraus. Insbesondere handelt es sich um 4,4'-Diphenylmethandiisocyanat und Mischungen aus 4,4'-Diphenylmethandiisocyanat und 2,4'-Diphenylmethandiisocyanat.

Außer den erfindungsgemäß eingesetzten Polyestern und Polyisocyanaten kann die Klebstoffformulierung bis zu 50 Gewichtsprozent, bezogen auf die gesamte Formulierung, an weiteren Additiven enthalten, die beispielsweise für eine verbesserte Hydrolysestabilität sorgen. Auch hier ist zu beachten, dass die VOC- und Fogging-Werte der gesamten Formulierung nicht wesentlich erhöht werden.
Diese Zusätze können sein: nichtfunktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel.

Die feuchtigkeitsvernetzenden Schmelzklebstoffe enthalten in einer besonderen Ausführungsform neben oder anstelle der Polyisocyanate zusätzlich Organosilane. Die Funktionalisierung der erfindungsgemäß eingesetzten Polyester kann durch eine stufenweise Umsetzung mit Polyisocyanaten zu isocyanatterminierten Präpolymeren und anschließender Reaktion mit Organosilanen oder durch eine Umsetzung mit einem Addukt aus Polyisocyanaten und Organosilanen erfolgen.
Im einfachsten Fall erfolgt die Umsetzung der Polyester mit einem Isocyanatoalkylsilan in einem OH/ NCO-Verhältnis von 1:1 bis 1:1,5.

Beispiele für Organosilane sind Aminopropyltrimethoxysilan, Aminopropyltriethoxysilan, N-Methyl-Aminopropyltrimethoxysilan, N-Cyclohexyl-Aminopropyltrimethoxysilan, N-Phenyl-Aminopropyltrimethoxysilan Mercaptopropyltrimethoxysilan, Mercaptotriethoxysilan.

Anstelle von Polyesterpolyolen können auch Polymere eingesetzt werden, die cyclische Carbonatgruppen tragen. Diese können in Gegenwart von Aminen ebenfalls zu Polyurethanen vernetzen. Es ist außerdem denkbar, dass das Carbonat-terminierte Polymer mit Silanen, die eine nucleophile Gruppe tragen, umgesetzt wird. Die resultierenden Silan-terminierten Polymere können ebenfalls in Gegenwart von Feuchtigkeit umgesetzt werden. Bevorzugt werden Aminosilane eingesetzt.

Die Herstellung des erfindungsgemäßen Schmelzklebstoffs erfolgt im einfachsten Fall durch Mischen der Einzelkomponenten in einem Rührbehälter mit oder ohne Lösungsmittel, vorzugsweise in der Schmelze. Die Aufschmelztemperatur richtet sich nach der Viskosität der Bestandteile. Sie liegt üblicherweise in einem Bereich von 100 bis 180 °C.

Die vorab beschriebenen feuchtigkeitshärtenden Schmelzklebstoffe können abhängig von der Viskosität der jeweiligen Formulierung bei Temperaturen zwischen 50 und 200 °C, bevorzugt zwischen 80 und 150 °C, appliziert werden.

Ebenfalls Gegenstand der vorliegenden Erfindung sind Schmelzklebstoffe enthaltend Polyester auf Basis von Polycarbonsäuren und Di- oder Polyolen, enthaltend Dicarbonsäuren der Formel HOOC-(CH2)x-COOH mit x > 10 und Diole der Formel HO-(CH2)y-OH, mit der Maßgabe, dass mindestens 50 Molprozent der Dicarbonsäuren, bezogen auf die gesamte Menge an Polycarbonsäurekomponenten, und mindestens 50 Molprozent der Diole, bezogen auf die gesamte Menge an Di- oder Polyolen, die Bedingung x+y ≥18 erfüllen.
Die erfindungsgemäßen Schmelzklebstoffe eignen sich in besonderer Weise zur Herstellung von Verklebungen einer Vielzahl von Substraten, insbesondere zur Verklebung von metallischen Substraten, Textilien und ganz besonders zur Verklebung diverser Kunststoffe. Die Art und der Umfang der Verklebung sind dabei nicht limitiert. Vorzugsweise handelt es sich bei den Verklebungen um Verklebungen in der Holz- und Möbelindustrie (beispielsweise Montageverklebung sowie die Kaschierung und Laminierung von Dekorfolien auf Faserplatten), im Automobilbereich (beispielsweise Kaschierungen von Folien oder Textilien auf Türseitenteilen, Dachhimmel, die Sitzherstellung sowie Retainerverklebungen), in der Bauindustrie, Schuhindustrie und Textilindustrie sowie im Fensterbau (beispielsweise zur Profilummantelung). Weiterhin eignen sich die erfindungsgemäßen Klebstoffe in der Verpackungsindustrie, als Dichtstoffe sowie als Beschichtungsmaterial.

Die erfindungsgemäßen Schmelzklebstoffe eignen sich sowohl für den Einsatz in einkomponentigen als auch in zweikomponentigen Systemen.
Bei den einkomponentigen Klebstoffen erfolgt die Herstellung der Mischung zeitlich unabhängig vom Klebstoffauftrag, insbesondere zu einem deutlich früheren Zeitpunkt. Nach dem Auftrag des erfindungsgemäßen Polyurethanklebstoffs erfolgt die Härtung beispielsweise durch thermisch oder Feuchtigkeit induzierte Reaktion der im Klebstoff enthaltenen Reaktionspartner.
Bei den zweikomponentigen Klebstoffen wird die Mischung unmittelbar vor Klebstoffauftrag hergestellt. Der Nachteil eines zweikomponentigen Auftrags gegenüber einem einkomponentigen Auftrag ist der erhöhte technische Aufwand sowie eine größere Fehleranfälligkeit, beispielsweise beim Mischen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

### Beispiel 1: Polyester P1 (erfindungsgemäß;)

3,57 kg Hexandiol-1,6 (30,3 mol) und 0,47 kg Monoethylenglykol (7,5 mol) werden zusammen mit 1,98 kg Terephthalsäure (11,9 mol) und 5,62 kg Octadecandisäure (17,9 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend werden 1 g (0.01 Gewichtsprozent) eines Titankatalysators zugegeben, die Temperatur auf 230°C abgesenkt und der Druck in der Apparatur stufenweise bis auf 10 mbar erniedrigt. Die Reaktion ist beendet, wenn keine Säureendgruppen mehr vorliegen (Säurezahl < 1 mg KOH/g) und eine Konzentration an Hydroxylendgruppen von 30 mg KOH/g erreicht wurde. Der Polyester besitzt einen Schmelzpunkt von 72°C mit einer Schmelzenthalpie von 83 J/g.

### Herstellung von feuchtigkeitshärtenden Schmelzklebstoffen (RHM)

### RHM-Beispiel 1

In einem 500 ml Planschliffkolben werden 250 g des Polyester P1 aufgeschmolzen und bei 130°C im Vakuum getrocknet. Danach werden 37 g 4,4'- Diphenylmethandiisocyanat (MDI), das entspricht einem OH/ NCO-Verhältnis von 1/ 2,2, zugegeben und zügig homogenisiert. Zur vollständigen Umsetzung der Reaktionspartner wird 45 Minuten bei 130 °C unter Schutzgasatmosphäre gerührt. Anschließend wird der feuchtigkeitshärtende Schmelzklebstoff abgefüllt.

Herstellung der Proben für die VDA 278 Messung:
Der RHM wird aufgeschmolzen und mittels Kastenrakel zu einem dünnen Film auf einer Aluminiumträgerfolie ausgezogen. Der RHM-Film wird sieben Tage bei 20°C und 65% relativer Luftfeuchte in einem Klimaschrank ausgehärtet und gemäß den Vorgaben der VDA 278 für die Messung vorbereitet.
Der Klebstoff weist einen VOC-Wert von 15 µ/g und einen FOG- Wert von 93 µg/g, gemessen nach der VDA 278, auf.

### Beispiel 2: Polyester 2 (nicht erfindungsgemäß)

3,10 kg Sebazinsäure (15,3 mol) werden zusammen mit 1,99 kg Hexandiol-1,6 (16,9 mol) und 0.01 Gewichtsprozent eines Titankatalysators in einem Kolben mit Destillationsaufsatz unter Stickstoff aufgeschmolzen. Bei einer Temperatur von 230°C wird innerhalb von etwa vier bis sechs Stunden der größte Teil des entstehenden Reaktionswassers abdestilliert. Anschließend wird der Druck in der Apparatur stufenweise bis auf 10 mbar erniedrigt. Die Reaktion ist beendet, wenn keine Säureendgruppen mehr vorliegen (Säurezahl < 1 mg KOH/g) und eine Konzentration an Hydroxylendgruppen von 30 mg KOH/g erreicht wurde. Der Polyester besitzt einen Schmelzpunkt von 65°C mit einer Schmelzenthalpie von 110 J/g.

### RHM-Beispiel RHM 2

Die Herstellung des RHM2 und der Proben für die VOC/FOG-Messung erfolgt analog Beispiel RHM1 mit Polyester P2 anstelle von Polyester P1.

Der Klebstoff weist einen VOC-Wert von 135 µg/g und einen FOG- Wert von >260 µg/g, gemessen nach der VDA 278, auf.

### Beispiel 3: Polyester 3 (nicht erfindungsgemäß)

4,00 kg Dodecandisäure (17,4 mol) werden zusammen mit 1,2 kg Monoethylenglykol (19,4 mol) und 0.01 Gewichtsprozent eines Titankatalysators in einem Kolben mit Destillationsaufsatz unter Stickstoff aufgeschmolzen. Bei einer Temperatur von 230°C wird innerhalb von etwa vier bis sechs Stunden der größte Teil des entstehenden Reaktionswassers abdestilliert. Anschließend wird der Druck in der Apparatur stufenweise bis auf 10 mbar erniedrigt. Die Reaktion ist beendet, wenn keine Säureendgruppen mehr vorliegen (Säurezahl < 1 mg KOH/g) und eine Konzentration an Hydroxylendgruppen von 30 mg KOH/g erreicht wurde. Der Polyester besitzt einen Schmelzpunkt von 83°C mit einer Schmelzenthalpie von 73 J/g.

### RHM-Beispiel RHM 3

Die Herstellung des RHM3 und der Proben für die VOC/FOG-Messung erfolgt analog Beispiel RHM1 mit Polyester P3 anstelle von Polyester P1.

Der Klebstoff weist einen VOC-Wert von 270 µg/g und einen FOG- Wert von 860 µg/g, gemessen nach der VDA 278, auf.

### Beispiel 4: Polyester 4 (nicht erfindungsgemäß)

3,2 kg Dodecandisäure (13,9 mol) werden zusammen mit 1,8 kg 1,6-Hexandiol (15,3 mol) und 0.01 Gewichtsprozent eines Titankatalysators in einem Kolben mit Destillationsaufsatz unter Stickstoff aufgeschmolzen. Bei einer Temperatur von 230°C wird innerhalb von etwa vier bis sechs Stunden der größte Teil des entstehenden Reaktionswassers abdestilliert. Anschließend wird der Druck in der Apparatur stufenweise bis auf 10 mbar erniedrigt. Die Reaktion ist beendet, wenn keine Säureendgruppen mehr vorliegen (Säurezahl < 1 mg KOH/g) und eine Konzentration an Hydroxylendgruppen von 30 mg KOH/g erreicht wurde. Der Polyester besitzt einen Schmelzpunkt von 71°C mit einer Schmelzenthalpie von 126 J/g.

### RHM-Beispiel RHM 4

Die Herstellung des RHM4 und der Proben für die VOC/FOG-Messung erfolgt analog Beispiel RHM1 mit Polyester P4 anstelle von Polyester P1.

Der Klebstoff weist einen VOC-Wert von 15 µg/g und einen FOG- Wert von 598 µg/g, gemessen nach der VDA 278, auf.

## Patentansprüche

1. Verwendung von Polyestern auf Basis von Polycarbonsäuren und Di- oder Polyolen, enthaltend Dicarbonsäuren der Formel HOOC-(CH2)x-COOH mit x > 10 und Diole der Formel HO-(CH2)y-OH, mit der Maßgabe, dass mindestens 50 Molprozent der Dicarbonsäuren, bezogen auf die gesamte Menge an Polycarbonsäurekomponenten, und mindestens 50 Molprozent der Diole, bezogen auf die gesamte Menge an Di- oder Polyolen, die Bedingung x+y ≥18 erfüllen, in Schmelzklebstoffen.

2. Verwendung gemäß Anspruch 1, **dadurch gekennzeichnet, dass** Brassylsäure, Tetradecandicarbonsäure, Hexadecandicarbonsäure und Octadecandicarbonsäure als Dicarbonsäuren der Formel HOOC-(CH2)x-COOH mit x > 10 eingesetzt werden.

3. Verwendung gemäß Anspruch 1 oder 2, **dadurch gekennzeichnet, dass** Hexandiol, Nonandiol, Decandiol und Dodecandiol als Diole der Formel HO-(CH2)y-OH eingesetzt werden.

4. Verwendung gemäß einem oder mehreren der Ansprüche 1 bis 3, **dadurch gekennzeichnet, dass** es sich bei den Schmelzklebstoffen um thermoplastische Schmelzklebstoffe handelt.

5. Verwendung gemäß einem oder mehreren der Ansprüche 1 bis 3, **dadurch gekennzeichnet, dass** es sich bei den Schmelzklebstoffen um reaktive Schmelzklebstoffe handelt.

6. Schmelzklebstoffe enthaltend Polyester auf Basis von Polycarbonsäuren und Di- oder Polyolen, enthaltend Dicarbonsäuren der Formel HOOC-(CH2)x-COOH mit x > 10 und Diole der Formel HO-(CH2)y-OH, mit der Maßgabe, dass mindestens 50 Molprozent der Dicarbonsäuren, bezogen auf die gesamte Mende an Polycarbonsäurekomponenten, und mindestens 50 Molprozent der Diole, bezogen auf die gesamte Menge an Di- oder Polyolen, die Bedingung x+y ≥18 erfüllen.

7. Verwendung von Schmelzklebstoffen gemäß Anspruch 6 zur Herstellung von Verklebungen.

8. Verwendung gemäß Anspruch 7, **dadurch gekennzeichnet, dass** es sich bei den Verklebungen um Verklebungen in der Holz- und Möbelindustrie, im Automobilbereich, in der Bauindustrie, Schuhindustrie und Textilindustrie sowie im Fensterbau.

9. Verwendung von Schmelzklebstoffen gemäß Anspruch 6 als Dichtstoffe sowie als Beschichtungsmaterial.

10. Verwendung gemäß einem oder mehreren der Ansprüche 7 bis 9, **dadurch gekennzeichnet, dass** die Schmelzklebstoffe in einkomponentigen oder in zweikomponentigen Systemen eingesetzt werden.

## Claims

1. Use of polyesters based on polycarboxylic acids and di- or polyols, comprising dicarboxylic acids of the formula HOOC-(CH2)x-COOH with x > 10 and diols of the formula HO-(CH2)y-OH, with the proviso that at least 50 mole per cent of the dicarboxylic acids, based on the total amount of polycarboxylic acid components, and at least 50 mole per cent of the diols, based on the total amount of di- or polyols, satisfy the condition x + y >18, in hotmelt adhesives.

2. Use according to Claim 1, **characterized in that** brassylic acid, tetradecanedicarboxylic acid, hexadecanedicarboxylic acid and octadecanedicarboxylic acid are used as dicarboxylic acids of the formula HOOC-(CH2)x-COOH with x > 10.

3. Use according to Claim 1 or 2, **characterized in that** hexanediol, nonanediol, decanediol and dodecanediol are used as diols of the formula HO-(CH2)y-OH.

4. Use according to one or more of Claims 1 to 3, **characterized in that** the hotmelt adhesives are thermoplastic hotmelt adhesives.

5. Use according to one or more of Claims 1 to 3, **characterized in that** the hotmelt adhesives are reactive hotmelt adhesives.

6. Hotmelt adhesives comprising polyesters based on polycarboxylic acids and di- or polyols, comprising dicarboxylic acids of the formula HOOC-(CH2)x-COOH with x > 10 and diols of the formula HO-(CH2)y-OH, with the proviso that at least 50 mole per cent of the dicarboxylic acids, based on the total amount of polycarboxylic acid components, and at least 50 mole per cent of the diols, based on the total amount of di- or polyols, satisfy the condition x + y >18.

7. Use of hotmelt adhesives according to Claim 6 for production of adhesive bonds.

8. Use according to Claim 7, **characterized in that** the adhesive bonds are adhesive bonds in the wood and furniture industry, in the automotive sector, in the construction industry, shoe industry and textile industry, and in window construction.

9. Use of hotmelt adhesives according to Claim 6 as sealants and as coating material.

10. Use according to one or more of Claims 7 to 9, **characterized in that** the hotmelt adhesives are used in one-pack or two-pack systems.

## Revendications

1. Utilisation de polyesters à base d'acides polycarboxyliques et de di- ou polyols, contenant des acides dicarboxyliques de formule HOOC-(CH₂)ₓ-COOH avec x > 10 et des diols de formule HO-(CH₂)_{y}-OH, à condition qu'au moins 50 pour cent en moles des acides dicarboxyliques, par rapport à la quantité totale des composants acides polycarboxyliques, et au moins 50 pour cent en moles des diols, par rapport à la quantité totale de di- ou polyols, satisfassent la condition x+y ≥ 18, dans des adhésifs thermofusibles.

2. Utilisation selon la revendication 1, **caractérisée en ce que** l'acide brassylique, l'acide tétradécane-dicarboxylique, l'acide hexadécane-dicarboxylique et l'acide octadécane-dicarboxylique sont utilisés en tant qu'acides dicarboxyliques de formule HOOC-(CH₂)ₓ-COOH avec x > 10.

3. Utilisation selon la revendication 1 ou 2, **caractérisée en ce que** l'hexane-diol, le nonane-diol, le décane-diol et le dodécane-diol sont utilisés en tant que diols de formule HO-(CH₂)_{y}-OH.

4. Utilisation selon une ou plusieurs des revendications 1 à 3, **caractérisée en ce que** les adhésifs thermofusibles consistent en des adhésifs thermofusibles thermoplastiques.

5. Utilisation selon une ou plusieurs des revendications 1 à 3, **caractérisée en ce que** les adhésifs thermofusibles consistent en des adhésifs thermofusibles réactifs.

6. Adhésifs thermofusibles contenant des polyesters à base d'acides polycarboxyliques et de di- ou polyols, contenant des acides dicarboxyliques de formule HOOC-(CH₂)ₓ-COOH avec x > 10 et des diols de formule HO-(CH₂)_{y}-OH, à condition qu'au moins 50 pour cent en moles des acides dicarboxyliques, par rapport à la quantité totale des composants acides polycarboxyliques, et au moins 50 pour cent en moles des diols, par rapport à la quantité totale de di- ou polyols, satisfassent la condition x+y ≥ 18.

7. Utilisation d'adhésifs thermofusibles selon la revendication 6 pour la fabrication de collages.

8. Utilisation selon la revendication 7, **caractérisée en ce que** les collages consistent en des collages dans l'industrie du bois et des meubles, dans l'industrie automobile, dans l'industrie du bâtiment, dans l'industrie des chaussures et dans l'industrie textile, ainsi que dans la construction de fenêtres.

9. Utilisation d'adhésifs thermofusibles selon la revendication 6 en tant qu'agents d'étanchéité, ainsi qu'en tant que matériau de revêtement.

10. Utilisation selon une ou plusieurs des revendications 7 à 9, **caractérisée en ce que** les adhésifs thermofusibles sont utilisés dans des systèmes monocomposants ou bicomposants.
